# EUROPEAN PATENT APPLICATION

(11) **EP 0 873 808 A1**
(43) Date of publication of application: **28.10.1998**
(21) Application number: 98106704.4
(22) Date of filing: 14.04.1998
(51) Int. Cl.: B23C 5/20, B23C 5/08, B23C 5/22

(54) **Cutting inserts for a side milling cutter**

(30) Priority: 18.04.1997 SE 9701442
(71) Applicant: SANDVIK AKTIEBOLAG, 811 81 Sandviken (SE)
(72) Inventor: Qvarth, Ingemar, 818 91 Valbo (SE); Roman, Stefan, 811 62 Sandviken (SE)
(74) Representative: Taquist, Lennart

(57) **Abstract**

A cutting insert for milling cutter tools, primarily for side milling cutters and slotting cutters, has upper and lower, mutually opposed surfaces (17, 18), of which at least the lower one (17) is substantially planar in order to form a bottom surface that may bear against a cooperating support surface on the milling cutter tool. Further, the cutting insert comprises mutually opposed first and second side surfaces (20) and mutually opposed third and fourth side or gable surfaces (30, 31), which either forms a main cutting edge (23, 25) at an edge line distal from the bottom surface (17). The cutting insert may be rotated half a revolution in order to indexate the one and the other main cutting edge, respectively. One of the main cutting edges (25) is more distant than the other main cutting edge (23) from the center axis of the screw hole, the more distant cutting edge being shorter than the nearer cutting edge (23) and located substantially symmetrically relative to the middle of said side or gable surface (30). In this way, when the cutting inserts are mounted into alternate directions in the side milling cutter, a chip partition is obtained, and thereby an improved chip-flow.

## Description

In a first aspect, the present invention relates to a cutting insert primarily intended for side milling cutters and slotting cutters, in accordance with claim 1. In a second aspect, the invention also relates to a milling cutter tool accomodating at least two such cutting inserts, in accordance with claim 6.

According to known milling cutter tools, such as side milling cutters, the periphery of the milling disk is normally provided with cutting inserts, of which every second one protrudes from one side of the disk and every other one from the opposed side of the disk, so that during the milling of, e.g., a groove in a workpiece, two planar, mutually parallel side surfaces and a bottom surface perpendicular to these side surfaces are accomplished, said bottom surface transposing into the side surfaces via fillets with more or less pronounced radii. More specifically, the bottom surface of the groove is accomplished by the main cutting edges of the inserts, while the desired surface smoothness of the side surfaces is achieved by the secondary cutting edges, which extend substantially perpendicularly to the main cutting edges, the radii between the bottom surface and the side surfaces being obtained by means of more or less markedly rounded corners at the transpositions between main cutting edges and secondary cutting edges. This staggered or alternating location of the cutting inserts along the disk periphery has required that the inserts be shaped into special right-hand and left-hand embodiments, in order to guarantee the necessary clearance between the groove side surface and the trailing part of the cutting insert behind the secondary cutting edge. Due to this reason, the cutting inserts are often given a basic rhombic shape, although they may also have a parallelepipedic basic shape. In practice, this necessity of making the cutting inserts in special right-hand and left-hand embodiments is a considerable disadvantage, *inter alia* because of the simple reason that stock-keeping is doubled, and the work in connection with insert replacements is made more difficult, since the machine operator must keep the two cutting insert types strictly apart in different insert assortments.

The problem with the handling of two different sorts of cutting inserts has been solved in US-A-5 454 671. According to this document, a cutting insert for slotting cutters is suggested that *inter alia* has two top side surfaces along the main cutting edges, which side surfaces are inclined and form an obtuse angle to the base surface. The two secondary cutting edges joined to a common main cutting edge lie in a common plane that forms an obtuse angle to each imaginary plane that is parallel to the base surface, and the corner angle between the individual secondary cutting edge and the appurtenant main cutting edge is equally large at at least two diametrically opposed insert corners. A side milling cutter equipped with such cutting inserts has the drawback that difficulties often arise to get the chips out of the groove, since no chip-parting takes place and the chips have the same width as the groove, whereby on one hand chip jamming may arise and on the other hand the side surfaces of the workpiece may be scratched. It is true that the cutting insert can be provided with chip formers in order to curve the chip in its longitudinal extension, thereby making it somewhat narrower than the groove. However, often the difference becomes too small for a good chip-flow. Moreover, the heat consumption is increased, whereby also the production of heat augments.

Thus, a first object of the present invention is to avoid the difficulties with chip jamming at cutting-off and grooving by milling cutter tools of the types side milling cutters and slotting cutters.

A second object of the present invention is to avoid chip jamming at cutting-off and grooving by side milling cutters and slotting cutters, using one single type of cutting inserts.

These and further objects have been achieved by shaping the cutting inserts with the features defined in the characterizing clause of claim 1.

For illustrative but non-limiting purposes, a preferred embodiment of the invention will now be described in more detail, with reference to the appended drawings. These are herewith briefly presented:
Figure 1 shows a partly exploded view of a side milling cutter according to the invention, in perspective obliquely from above.
Figure 2 shows a cutting insert seat of a side milling cutter according to the invention, in perspective obliquely from above.
Figure 3 shows a cutting insert according to the invention, in perspective obliquely from above.
Figure 4 shows a straight top view of a cutting insert according to the invention.
Figure 5 shows a cutting insert according to the invention, straight from the side.

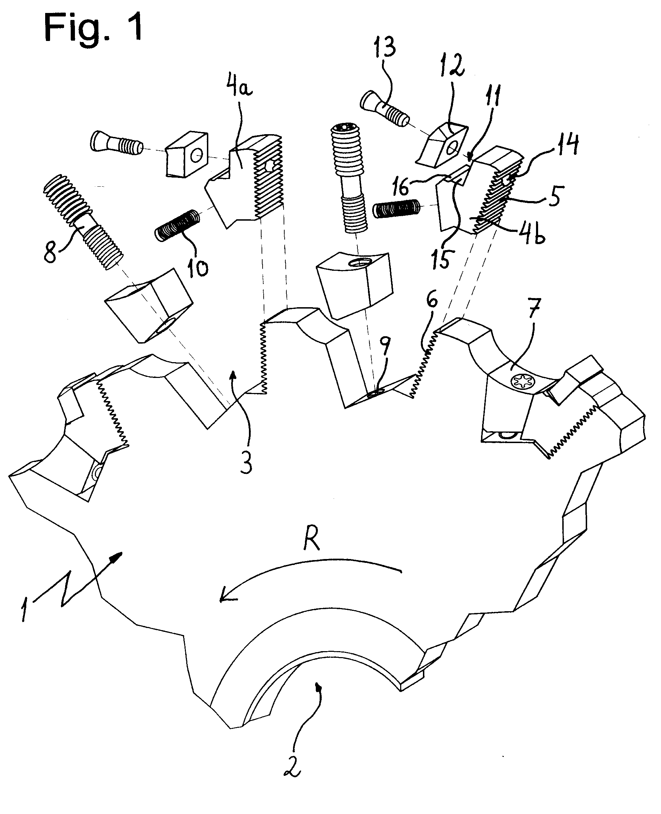

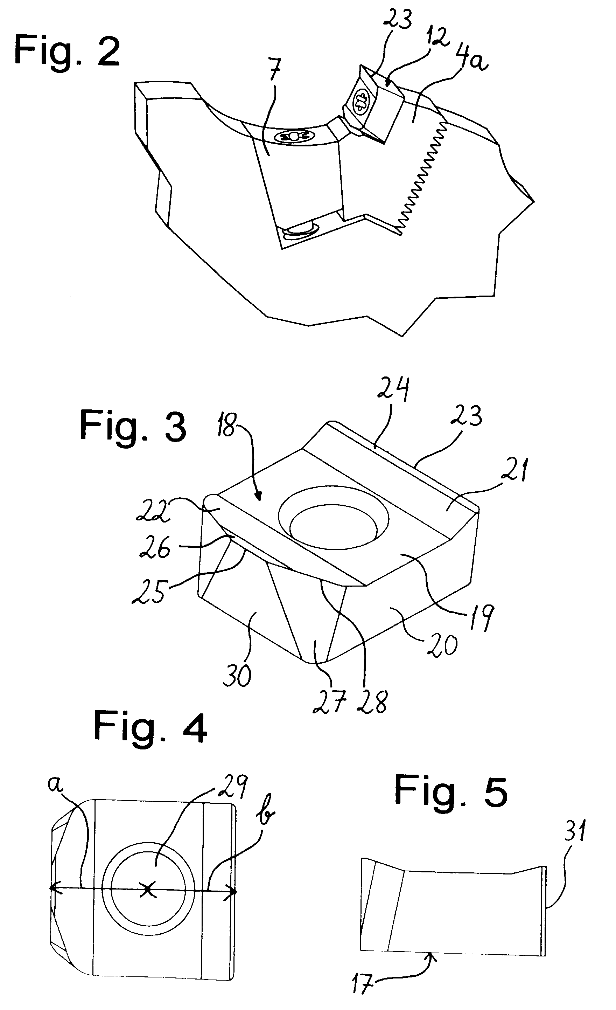

In Fig 1, a disk-shaped milling cutter body is designated by reference numeral 1, which body is intended to rotate around the central axis in the direction R, and which has a central hub portion 2 and a number of peripherical recesses 3, which usually are substantially equidistantly arranged around the periphery of the disk. An insert-carrying cartridge 4 is accomodated in each recess 3, and the cartridge may comprise the whole width of the disk or possibly be somewhat wider than the disk. The trailing side surface 5 of the cartridge is substantially axially toothed and is brought into engagement with a correspondingly toothed surface 6 in the recess 3, whereby the cartridge may be variably fineadjusted axially. When the position of the cartridge has been determined, it is clamped by screwing the clamping wedge 7, for instance by means of a differential screw 8, whose two threaded end portions are threaded in opposed directions, which screw is threaded into a threaded hole 9 in the recess 3. In order to give some stability during the mounting, a compression spring 10 may be mounted in a hole (not shown) in the cartridge 4 and be brought to press against the clamping wedge 7. In its leading, radially outer portion, the cartridge is provided with a cutting insert seat 11, in which a cutting insert 12 is mounted by a locking screw 13, which is threaded into a threaded hole 14 in the cartridge. In order to avoid a direct contact between the radially inner, non-operative cutting edge of the insert and the substantially tangential abutment surface 15 of the insert seat, said abutment surface is provided with a step 16, whereby said edge is free. This may be most clearly seen in Fig 2.

The insert-carrying cartridges may also be fastened by "negative" clamping wedges in accordance with the Swedish patent application 9503867-5, hereby incorporated by this reference.

One embodiment of the cutting inserts according to the invention may be seen in Fig 3 to 5. These are made of coated or uncoated cemented carbide, but certain ceramic hard materials may also be used. It has a bottom surface 17, side surfaces and a top side 18 opposed to the bottom surface, the middle portion 19 of the top side being substantially plane-parallel to the bottom surface 17. The middle portion 19 is surrounded by on one hand two edges towards the two side surfaces 20, and on the other hand by two angled rake surfaces 21 and 22. The rake surface 21 extends along a substantially straight main cutting edge 23, possibly over a reinforcing chamfer 24. The opposed angled rake surface 22 adjoins to a main cutting edge 25, possibly over a reinforcing chamfer 26. At this end of the insert, the corners have been either ground away to a large extent, or the insert is directly pressed with strongly rounded-off corners. The corners may for instance be bevelled, so that vaulted corner portions 27 are created. Thereby, the main cutting edge 25 becomes considerably shorter than the opposed main cutting edge 23. The edges 28 closer to the side surfaces 20 will basically not act as cutting edges, while only the parts of the upper edge of the corner portions that are located closer to the cutting edge 25 will work as cutting edges (besides the main cutting edge 25, naturally). The total operative cutting edge length, projected upon a line parallel to the opposed main cutting edge 23, suitably constitutes between 20 and 60% of the maximal width of the cutting insert (in the illustrated case, the width between the substantially parallel side surfaces 20). Below the main cutting edge 25 extends the substantially planar side surface 30, which is substantially perpendicular to the bottom surface 17. The side surface 30 works as an abutment surface against the tangential surface 15 in the cartridge. In the central portion of the cutting insert, there is provided a through-hole 29 for the insertion of the locking screw 13. The main cutting edge 25 is located somewhat more distant from the central axis of said hole 29 than the main cutting edge 23. Thus, the distance a in Fig 4 is suitably between 3 and 25% longer than the distance b, preferrably between 5 and 20%. This implies that in the cartridges 4b, where the cutting edges 25 are turned radially outwards and the cutting edges 23 radially inwards, the support surface 15 is located correspondingly farther radially outwards, in comparison with the support surfaces 15 in the cartridges 4a. By this diffrence in the radial position of support surface 15 between the cartridges 4a and 4b, the side surface 31 below the cutting edge 23 may also function as an abutment surface. Contrary thereto, the screw holes 14 in the cartridges 4a and 4b are located at substantially the same radius from the rotation axis of the tool. This brings the advantage that the operator becomes aware of the mistake, if he happens to turn an insert erroneously: in the one case, it is not at all possible to mount and in the other case, it is possible to rotate the insert because it does not reach the support surface 15. Optionally, the cartridges 4a, 4b are marked in some way, by stamped designations or similar, in order to make them easily distinguishable at their mounting. However, this mounting will normally have been made already, before a customer buys a side milling cutter. Due to production-technical reasons, the step 16 may be of the same basic design in both cartridges 4a and 4b, respectively, although the steps may also be differently shaped.

When the cutting inserts are mounted in the milling cutter disk 1, every second insert is turned with the cutting edge 23 outwards and every second insert with the cutting edge 25 outwards. Since the cutting edge 25 extends somewhat farther radially outwards than the cutting edge 23, the cutting edge 25 will cut a chip in the middle of the groove bottom, so that a middle groove arises in the surface of the groove bottom. The cutting edge 23 does not reach down into this middle groove, wherefore the middle portion of the cutting edge 23 becomes idle and only the side portions of the cutting edge 23 come into an operative cutting engagement with the workpiece, whereby the cutting edge 23 cuts two chips, one on either side of the middle and axially to the side surfaces of the groove. Thereby, an efficient chip partition is attained: the cutting edge 25 cuts a middle chip and the cutting edge 23 cuts two side chips. In this way, the risks of chip jamming and damages of the machined surfaces of the workpiece are minimized, and a chip-flow is attained that is easy to handle. Thus, a side milling cutter provided with cutting inserts according to the present invention becomes considerbly more reliable in running than a side milling cutter according to the patent specification US-A-5 454 671.

Several different insert and chip-breaking geometries are feasible, as long as a shorter central cutting edge reaches farther outwards than a longer opposed cutting edge on the same cutting insert, the operative parts of the two cutting edges together covering the whole chip width. For instance, the planar middle portion 19 may be disposed of, whereby the rake surfaces 21 and 22 meet along a break line. Disregarding the fact that the cutting inserts according to US-A-5 454 671 have both main cutting edges at the same distance from the central axis of the center hole, all insert geometries disclosed in that specification may be used, after one cutting edge has been shortened around the middle portion of the cutting edge, in accordance with this invention.

In Fig 3 to 5, a cutting insert is illustrated with parallel side surfaces 20. However, insert designs, according to which the side surfaces 20 converge slightly (e.g., by 1 to 15° towards each other) towards the end where the shorter main cutting edge 25 is located, are also feasible, thereby improving the axial clearance. Further, the support surfaces 30 and 31 may be angled in such a way that they form a somewhat acute angle to the top surface 18 (e.g., between 1 and 10°), thereby improving the clearance radially. Then the support surface 15 must of course be given a corresponding inclination.

The cutting inserts according to the invention are perfectly suitable for the machining of materials that are difficult to machine or "smeary", such as for instance stainless steel. Further, a side milling cutter according to the invention may be used for both cutting-off and grooving. In the latter case, a final fine machining may possibly be required, since the bottom of the groove does not become perfecly planar.

## Claims

1. A cutting insert for primarily milling cutter tools, in particular side milling cutters and slotting cutters, having upper and lower opposed surfaces (17, 18), of which at least the lower one (17) is substantially planar in order to form a bottom surface that may bear against a cooperating support surface on the milling cutter tool, mutually opposed first and second side surfaces (20) and mutually opposed third and fourth side or gable surfaces (30, 31), which either forms a main cutting edge (23, 25) at an edge line distal from the bottom surface (17), the cutting edge being capable of being rotated half a revolution in order to indexate the one and the other main cutting edge, respectively, *characterized in that* one of the main cutting edges (25) is more distant than the other main cutting edge (23) from the axis around which the cutting insert is rotated.

2. Cutting insert according to claim 1, wherein the more distant main cutting edge (25) is shorter than the nearer main cutting edge (23).

3. Cutting insert according to claim 2, wherein the more distant main cutting edge (25) is situated substantially symmetrically relative to the middle of said side or gable surface (30).

4. Cutting insert according to claim 1 to 3, wherein the more distant main cutting edge (25) has an operative length projected on a line parallel to the opposed main cutting edge (23) corresponding to between 20 and 60% of the maximal width of the cutting insert.

5. Cutting insert according to any of the preceding claims, wherein the axis, around which the cutting insert is rotated, is the center axis in a through-hole (29) intended for a locking screw (13).

6. Cutting insert according to claim 5, wherein the distance (a) from said center axis to the more distant main cutting edge (25) is between 3 and 35% longer than the distance (b) between said axis to the nearer main cutting edge (23).

7. Cutting insert according to any of the preceding claims, wherein the upper side has two angled rake surfaces (21, 22), one along either of the two main cutting edges (23, 25).

8. A side milling cutter comprising a substantially round disk (1) with recesses (3) made around the periphery, which recesses are intended to accomodate cutting insert-carrying cartridges (4) that are clamped in the recesses by means of clamping wedges (7), *characterized in that* the side milling cutter comprises at least two cartridges, either of which carrying a cutting insert according to any of claims 1 to 5, one of the cutting inserts having the shorter main cutting edge (25) turned radially outwards and the other cutting insert having the longer main cutting edge (23) turned radially outwards.

9. Side milling cutter according to claim 8, wherein the cutting insert-carrying cartridges (4) have a step (16) in the cutting insert seat (11), so that the non-operative cutting edge is free.

10. Side milling cutter according to claim 8 or 9, wherein the cutting insert is clamped in the cartridge only by means of a locking screw (13), without any abutment or support between any of the side surfaces of the cutting insert and a surface of the cartridge.
